# EUROPEAN PATENT APPLICATION

(11) **EP 4 847 396 A1**
(43) Date of publication of application: **02.12.2026**
(21) Application number: 25075004.9
(22) Date of filing: 28.05.2025
(51) Int. Cl.: B64U 10/14

(54) **A COUPLING MEANS**

(71) Applicant: Gernaey, Maarten, 2600 Berchem (BE)
(72) Inventor: Gernaey, Maarten, 2600 Berchem (BE)
(74) Representative: Ipsilon Belgium

(57) **Abstract**

A coupling means comprising:
- a stationary unit having hollow passage with at least one stationary cam;
- a thrusting unit,;
- a coupling shaft having at its first outer end a coupling part, adapted to avoid the first end to enter the hollow passage of the stationary unit, the second outer end extending though the hollow passage of the stationary unit;
- a cam unit having void inner space for receiving the second outer end of the coupling shaft, said cam unit comprising a plurality of spaced cam surfaces at its end oriented towards the stationary unit,
- a first spring;
- a second spring;
The stationary cam, thrusting unit and cam unit are adapted to sequentially unidirectionally rotate the cam unit relative to stationary cam and unit on successive reciprocations of the thrusting unit over the stationary unit, the cam unit and coupling shaft permitting relative axial movement of the cam unit and coupling shaft.

## Description

### Field of the Invention

The present invention generally relates to coupling means and coupling systems, in particularly coupling means and coupling systems for coupling load carriers to loads, more particularly to couple loads like payloads to vehicles, like civil or military aviation vehicles, such as drones. The loads may be civil or military payload, like spare batteries for drones, or military payload like ammunition.

### Background of the Invention

At present, on the one hand, more and more people rely on immediate delivery of services and goods. Air transportation of individual packages develops as the traffic over land becomes more and more cumbersome because of road congestions.

On the other hand in warfare, battles are fought using unmanned vehicles, in particularly unmanned aviation vehicles, more particularly drones. Such drones transport not only goods from and to the battlefield, but also carry ammunition and alike, and are used to perform airstrikes.

An emerging requirement for both these applications is an easy and fast way to couple loads to such air transportation vehicles, like drones. A coupling system which can be operated, this is coupling and/or decoupling preferably without human interaction, and for certain applications, decoupling while flying the vehicle.

### Summary of the Invention

According to a first aspect of the invention, a coupling means is provided. The coupling means is in particular useful to couple vehicles, such as air transportation vehicles, like drones, to a load.

The coupling comprising:
- a stationary unit having hollow passage with at least one stationary cam;
- a thrusting unit,;
- a coupling shaft having at its first outer end a coupling part, adapted to avoid the first end to enter the hollow passage of the stationary unit, the second outer end extending though the hollow passage of the stationary unit;
- a cam unit having void inner space for receiving the second outer end of the coupling shaft, said cam unit comprising a plurality of spaced cam surfaces at its end oriented towards the stationary unit,
- a first spring;
- a second spring;
The stationary cam, thrusting unit and cam unit are adapted to sequentially unidirectionally rotate the cam unit relative to stationary cam and unit on successive reciprocations of the thrusting unit over the stationary unit, the cam unit and coupling shaft permitting relative axial movement of the cam unit and coupling shaft.

The coupling means comprises:
- a stationary unit having hollow passage and having at least one, and possibly more than one stationary cams;
- a thrusting unit, said thrusting unit is reciprocally axially slidably moveable in view of the stationary unit and is restrained against rotation relative to the stationary unit;
- a coupling shaft axially rotatably mounted in the hollow passage of the stationary unit, the coupling shaft having at its first outer end a coupling part, adapted to avoid the first end to enter the hollow passage of the stationary unit, the second outer end extending though the hollow passage of the stationary unit;
- a cam unit which is axially slidably moveable in view of the thrusting unit and rotatable in view of the thrusting unit, and having void inner space for receiving the second outer end of the coupling shaft, said cam unit comprising a plurality of spaced cam surfaces at its end oriented towards the stationary cam ,
- a first spring adapted to cause a relative movement between the thrusting unit and the stationary unit;
- a second spring adapted to cause a relative movement between the cylindrical cam unit and the stationary unit;
wherein said stationary cam, thrusting unit and cam unit are adapted to sequentially unidirectionally rotate the cam unit relative to stationary cam on successive reciprocations of the thrusting unit over the stationary unit, the cam unit and coupling shaft are adapted to permit relative axial movement of the cam unit and coupling shaft when the second outer end of the coupling shaft is received in the void inner space.

According to some embodiments, the cam unit and coupling shaft may be adapted to permit restrained relative rotational movement of the cam unit and coupling shaft.

The restrained movement of the cam unit and the coupling shaft may allow relative rotational movement between the cam unit and the coupling shaft when the cam unit is, possibly and even preferably suddenly, rotated over a given sector or over a given angle triggered by one thrusting movement of the thrust unit. A thrusting movement is to be understood as a movement of the thrusting unit in one of the two senses of axial movement relative to the stationary unit. The thrusting unit makes two consecutive thrusting movements, one in the first sense, the second in the opposite sense of movement. During these two consecutive thrusting movements, the coupling shaft may perform only a part of the rotational movement of a rotation made by the cam unit during these two consecutive thrusting movements. This means that, when the cam unit makes a rotation of x°, the coupling shaft makes a rotational movement of y°, y<x. During a first part of x1 ° (x1<x) of the rotation of the cam unit, the coupling shaft may make a rotational movement of x1°, while during the next x°-x1° of rotation of the cam unit, the coupling shaft may be at stand still, even be prevented to rotate. Preferably x1° is about x°/2. Preferably y° is about x°/2. According to some embodiments, x equals 90° or 180° upon one thrust of the thrusting unit. Possibly the coupling shaft makes a rotational movement over the same angle of rotation as is performed by the cam unit during the first thrusting movement of these two consecutive thrusting movements, while the coupling shaft makes no rotational movement, hence stands still in view of the cam unit during the second thrusting movement of these two consecutive thrusting movements.

According to some embodiment, the thrusting unit may have a hollow passage in which the stationary unit is at least partially sunk

According to some embodiment, the thrusting unit may be reciprocally axially slidably mounted on the outer surface of the stationary unit.

According to some embodiment, the stationary unit may comprise a housing having an inner void space, the thrusting unit comprises a first component located in said inner void space of said stationary unit, and a second component located at the outer side of said stationary unit, the first component of the thrusting unit being moved by the second component by means of at least a third component extending though the housing of the stationary unit.

According to some embodiment, this housing may be adapted to encompass the first and second spring, the cam unit and at least part of the thrusting unit.

According to some embodiment, this housing may comprise at least two housing parts being detachably connected to each other.

As an example, the at least two housing parts may be screwable one to the other. one housing part may be provided with an outwards oriented screw thread, while the other may be provided with a inwardly oriented screwing thread matching with the outwards oriented screw thread. Alternately between the housing parts, snap fit or press fit connections may be provided.

The first component of the thrusting unit may be moved by one or more, like 2, 3, 4, 5 or 6 rods or bars coupled to the second component and extending though the housing of the stationary unit. The first component may provide the hollow passage of the thrusting unit, and may have contact surfaces for receiving and contacting the one or more, like 2, 3, 4, 5 or 6 rods or bars. The first component may have the shape of a tube, to which flanges are extending at the outer side of the tube for receiving and contacting the one or more, like 2, 3, 4, 5 or 6 rods or bars. Possibly one flange is provided for each rod or bar.

Such arrangements may provide a relatively compact and/or relatively small configuration to the coupling means.

According to some embodiments, the coupling shaft may be axially rotatably mounted in the hollow passage of the stationary unit, the coupling shaft having at its first outer end a coupling part, adapted to avoid the first end to enter the hollow passage of the stationary unit, the second outer end extending though the hollow passage of the thrusting unit.

According to some embodiments, the cam unit may comprise at least one cylindrical surface. Possibly, the cam unit may be a cylindrical cam unit

According to some embodiments, the cam unit may be axially slidably mounted and at least partially located in the hollow passage of the thrusting unit, or the cam unit (400) is axially slidably mounted and at least partially located in the hollow passage of the stationary unit.

According to some embodiments, the cam unit may be axially slidably moveable and at least partially located in the hollow passage of the thrusting unit and rotatable in view of the thrusting unit, and having void inner space for receiving the second outer end of the coupling shaft, said cam unit comprising a plurality of spaced cam surfaces at its end oriented towards the stationary unit. According to some embodiments, the cam unit may be axially slidably moveable and at least partially located in the hollow passage of the stationary unit and may be rotatable in view of the thrusting unit, and having void inner space for receiving the second outer end of the coupling shaft, said cam unit comprising a plurality of spaced cam surfaces at its end oriented towards the stationary cam.

Such arrangements may further contribute to the provision of relatively compact and/or relatively small configuration to the coupling means.

According to some embodiments, the angular displacement of the coupling shaft may be less than the angular displacement of the cam unit during each reciprocation of the thrusting unit over the stationary unit.

According to some embodiments, the inner surface of the void inner space of the cam unit and the outer surface of the coupling shaft form an axial cam system.

According to some embodiments, the inner surface of the void inner space of the cam unit and/or the outer surface of the coupling shaft comprises one or more protrusions and/or recessions, said protrusions and recession forming the one or more cams and one or more cam follower of said axial cam system.

The recesses may form a path for the protrusions to follow during rotation of the coupling shaft in view of the cam unit. The recesses in this sense provides the cams and the protrusions the cam followers of the axial cam system.

Possibly and preferably equally distributed around the coupling shaft and the cam unit, a plurality of identical protrusions and recessions are provided. As a preferred option 2 sets of identical protrusions and recessions are provided, distributed around the coupling shaft and the cam unit at an angular distance or angular separation or pitch angle of 180°. As another preferred option 4 sets of identical protrusions and recessions are provided, distributed around the coupling shaft and the cam unit at an angular distance of 90°.

According to some embodiments, the outer surface of the coupling shaft may comprise said one or more recessions, the inner surface of the void inner space of the cam unit comprises said protrusions.

According to some embodiments the stationary unit may have a cylindrical hollow passage with a circular cross section, the first outer end of the coupling shaft has a radial perimeter different from and extending the edge of the circular cross section.

The shaft itself preferably has a cylindrical shape with a circular cross section.

According to some embodiments, the stationary unit may have an outer radial cross section perimeter at its outer end away from the cam unit, said coupling part has a radial perimeter which fits in this outer radial cross section perimeter of the stationary unit in a first rotational position of the coupling shaft relative to the stationary unit, the coupling devices radial perimeter extends radially beyond the outer radial cross section perimeter of the stationary unit in a second rotational position of the coupling shaft relative to the stationary unit.

The outer radial cross section perimeter of the stationary unit may preferably be non- circular, preferably polygonal, such as rectangular or even square. The thrusting unit, when reciprocally axially slidably over the outer surface of the stationary unit, may have an inner void or an opening which may snugly fit over the outer surface of the stationary unit. The inner perimeter of the thrusting unit may be form-locking with the outer perimeter of the stationary unit. The inner opening may preferably also be polygonal, possibly identical to the outer surface of the stationary unit.

According to some embodiments, the thrusting unit may be reciprocally axially slidably moveable between a retracted position and an extended position, said stationary cam is adapted to block the cam unit when the thrusting unit is in rest position, the thrusting unit has at least one finger to move the cam unit from a rest position wherein the cam unit is closest to the stationary cam, to a projected position wherein the cam unit is most extended from the stationary cam, said stationary cam and said at least one finger coacting with said cam unit upon axial movement of the thrusting unit to sequentially traverse said stationary cam and thereby unidirectionally rotate the cam unit to successively different rotative positions relative to stationary unit during reciprocations of the thrusting unit

During this rotation of the cam unit, the cam unit and the coupling shaft may relatively axially move one in view of the other. During at least a part of the rotation of the cam unit, the coupling shaft may rotate, optionally rotate over the same angular displacement as the cam unit.

According to some embodiments, the stationary unit, thrusting unit, coupling shaft and cam unit may be adapted to sequentially unidirectionally rotate the cam unit and the coupling shaft relative to the stationary unit during one reciprocation.

According to some embodiments, during one reciprocation, the cam unit unidirectionally may rotate in two steps to two successively different rotative positions relative to stationary unit.

During this rotation of the cam unit, the cam unit and the coupling shaft may relatively axially move one in view of the other. During one of the first and second steps, the cam unit and the coupling shaft may co-rotate, while during the other of the first and second steps, the cam unit may rotate while the coupling shaft is no longer rotated along with the cam unit. At that moment, the coupling shaft remains in stand still position.

According to some embodiments, the stationary unit, thrusting unit, coupling shaft and cam unit may be adapted to sequentially unidirectionally rotate the cam unit and the coupling shaft relative to the stationary unit during the first of the two steps, and may be adapted to sequentially unidirectionally rotate only the cam unit relative to the stationary unit during the second of the two steps.

Possibly, during one of the two steps, the cam unit does rotate, but the coupling shaft doesn't. This has the advantage that, when the coupling takes place, the coupling part may be rotated without the coupling part making contact with the device to be coupled. Once rotated in the coupling position, i.e. the second rotational position, the device to be coupled may come into contact with the coupling part, which itself is in steady state. As such a more reliable coupling with less, even no, hindrance of sliding parts during coupling, which parts otherwise would need to slide on over the other, is provided.

According to some embodiments, the sequentially unidirectionally rotations of the cam unit may rotate the cam unit such that after a pair number of consecutive reciprocations, the coupling shaft has rotated 360°. For this, the cam unit may comprise a pair number of cams.

The first outer end of the coupling shaft is provided with a coupling part. The coupling part has a shape such that the radial perimeter of the coupling part extends beyond the radial cross section of the opening of the hollow passage through which the shaft extends.

The shape of the radial perimeter of the coupling part preferably is most wide at the contact surface between the coupling part and the stationary unit.

The shape of the radial perimeter of the coupling part, preferably being most wide at the contact surface between the coupling part and the stationary unit, is to cooperate with an opening in a coupling element of a second device to be coupled to the first device of which the coupling means is part of, or to which the coupling means is attached. When bringing the opening of the coupling element over the coupling part, such that the coupling part sticks through the opening, and thereafter changing the relative rotational orientation of the opening and the coupling part, the coupling part may hook under the part of the device in which the opening is provided. To achieve this, the perimeter of the opening of the coupling element and the perimeter of the coupling part must be chosen such that in a first rotational position, the coupling part may fit within the opening perimeter, while in a second rotational position, the perimeters intersect. Thereby the coupling part, hence the coupling shaft, and the coupling element are interlocked. In other terms, using a projection parallel to the axis of the coupling shaft of the perimeter of the opening of the coupling element and the perimeter of the coupling part, in a first rotational position, the projection of these perimeters are free of intersection, while in a second rotational position, the projection of these perimeters intersect. As an example, the perimeters being both substantially equal squares, the opening of the coupling element will fit over the perimeter of the coupling part in four rotational positions, i.e. when the corners of the opening and the coupling parts are aligned. These four positions equal the first rotational position. By rotating one of the opening or the coupling part over 45°, the projection according to the axis of the coupling shaft of the opening of the coupling element and the perimeter of the coupling part will intersect. Indeed when the coupling part sticks through the opening in this rotational position, the corners of the coupling part will not pass and hook over the rim of the opening.

By this provision, the fragments of the coupling part extending beyond the edge of the opening having passed over the coupling part in the first rotational position, can be used as hooks blocking the device having its opening slid over the coupling part.

Preferably the dimensions and shapes of the stationary unit, the thrusting unit, the coupling shaft and its coupling part are dimensioned such that upon one reciprocation of the thrusting unit, the coupling part of the coupling shaft will be brought from a first rotational position, in which the coupling part fits through an opening in a coupling element of a device, into the second rotational position in which the coupling part and the opening are interlocked.

Possibly, the shape of the radial perimeter of the coupling part and the outer radial cross section perimeter of the stationary unit at the contact surface between the coupling part and the stationary unit are dimensioned such that
- in a first rotational position of the coupling shaft, thus also the coupling part, the radial perimeter of the coupling part falls within the outer radial cross section perimeter of the stationary unit at the contact surface between the coupling part and the stationary unit, while
- in a second rotational position of the coupling shaft, hence the coupling part, the radial perimeter of the coupling part extends beyond the outer radial cross section perimeter of the stationary unit at the contact surface between the coupling part and the stationary unit.

Possibly, the coupling shaft may comprise several components, which are connected on to the other. As an example, the coupling shaft comprises a rod, like a cylindrical rod which provides the second outer end of the coupling shaft, and a coupling part being detachably connected to the first end of the rod. The outer radial perimeter of the coupling part is wider than the outer radial perimeter, possibly being the diameter, of the rod. The coupling may be provided by matching screwing threads, one provided at the outer surface of the rod, the other being provided at the surface of a recess in the lower side of the coupling part.

The radial perimeter of the coupling part is non circular. This allows easy coupling to an opening of or in a device. When the coupling shaft and thus the coupling part is in the first rotational position, an opening of a device to be coupled may pass over the coupling part and possibly over the outer side of the stationary unit at the contact surface between the coupling part and the stationary unit in case such contact surfaces is present. When the coupling shaft and thus the coupling part is brought in the second rotational position, e.g. due to the part of the device in which the opening is provided causing a thrusting movement of the thrusting unit by pushing the thrusting unit in axial direction, the opening of a device brought over the coupling part and possibly over the outer side of the stationary unit may be prevented to pass over the coupling part. This in case the edge of the opening is tight enough, i.e. having its edge intersecting with the radial perimeter of the coupling part in this second rotational position. To achieve this, the radial perimeter of the coupling part and the shape of the edge of the opening must be chosen such that in at least one rotational position of the radial perimeter of the coupling part and the opening, the edge of the opening falls within the radial perimeter of the coupling part, while in at least one other rotational position of the radial perimeter of the coupling part and the opening, the edge of the opening intersects with the radial perimeter of the coupling part.

Possibly, the stationary unit comprises a cuboid shaped volume with a polygonal, preferably rectangular or square radial cross section. Most preferably the cuboid volume is a rectangular cuboid volume with a rectangular or square radial cross section.

Also the thrusting unit, also referred to as plunger, preferably has a cuboid shaped volume with a polygonal, preferably rectangular or square radial cross section. Most preferably the cuboid volume is a rectangular cuboid volume with a rectangular or square radial cross section. At the outer end of the stationary unit, the stationary unit preferably has at least one, more preferred more than one, such as 2, 3 or 4 cams which cooperate with the cam unit. The cams may have at least one flank being substantially parallel to the axial direction of the shaft which fit within the passage of the stationary unit.

The thrusting unit may preferably have a hollow passage in which the stationary unit is at least partially sunk, of which the perimeter has the same or a similar radial cross section as the outer radial cross section of the stationary unit. The stationary unit is at least partially sunk and may slide snuggly within the hollow passage of the thrusting unit. Possibly, the thrusting unit is provided with more than one finger, such as 2, 3 or 4 fingers. Most preferably the thrusting unit comprises as much fingers at the number of cams provided by the stationary unit.

Each finger may be in sliding contact with one of the cams of the stationary unit. Possibly the fingers have at least one side being substantially parallel to the axial direction of the shaft which fits within the passage of the stationary unit and hence within the passage of the thrusting unit. Each finger may be in sliding contact with the flank of a cam being substantially parallel to the axial direction of the shaft which fit within the passage of the stationary unit.

The cam unit may comprise a cylindrically shaped cam body comprising at least one, and preferably more than one cam, such as 2, 3 or 4 cams. Most preferably the cam unit comprises as much cams as the number of cams provided by the stationary unit and as much fingers provided by the thrusting unit. Each cam may comprise a flank being substantially parallel to the axis of the shaft.

For some embodiments, during a reciprocation of the thrusting unit and starting from the rest position or retracted position, the cam or cams of the stationary unit block the cam unit, hence prevent moving of the cam unit relative to the stationary unit and the thrusting unit. By extending the thrusting unit to the extended position, the finger or fingers may push the cam or cams of the stationary unit and the cam body axially away from each other. No rotation will occur as long as the cam or cams of the stationary unit and the cam or cams of the cam body are in contact with each other. The second spring system will accumulate the force applied by the thrusting movement. The moment the cam or cams of the stationary unit and the cam or cams of the cam body lose contact, the cam unit will rotate until the cam or cams of the cam body hit the finger or fingers of the thrusting unit. The thrusting unit may reach its extended position. The energy for the rotation will be provided by the force loaded second spring system. The cams may have a contact face at the extreme side of the cams such that this rotation is implied by the retracting movement of the second spring applied to the cam unit. When moving the thrusting unit in opposite direction, hence from extended to retracted position, the finger or fingers will slide from the cam surface or surfaces, until the finger or fingers lose contact with the cam surface or surfaces of the cam or cams of the cam unit. The partially unloaded second spring can now continue the retraction to force the cam unit again completely against the cam or cams of the stationary unit. This causes a second rotational movement of the cam unit in view of the stationary unit.

Possibly two cams of the cam body have their extreme cam surface at a different axial position of the coupling shaft. As such, the cam unit may be blocked at a different axial position relative to the coupling shaft. By positioning or designing the axial cam system , the coupling shaft may co-rotate with the cam unit during the first step of the rotation, the coupling shaft may co-rotate to a lesser extent, or even not rotate with the cam unit during the second step of the rotation.

Possibly, the cams and fingers may be designed such that the coupling shaft makes ½ of the rotation of the cam unit per reciprocation.

Possibly, the cams and fingers may be designed such that the cam unit makes a rotation of 90° during each reciprocation. Most preferably the cams and fingers and the axial cam system may be designed such that the cam unit makes a rotation of 90°, and the coupling shaft a rotation of 45° during each reciprocation.

In the context of this invention, the term spring means an elastic body or device that recovers its original shape when released after being distorted. The first spring and the second spring may be springs being loaded when being compressed or when being elongated. The springs may be identical or similar. Each of the springs may be an elastic element, like a rubber band, being loaded when extended, or may be compression loaded or extension loaded coiled springs.

As to the material the elements of this coupling means are made of, there is no restriction. All parts and element, independent one from the other, may be made out of known materials, such as polymer material, polymeric material, composite material, metal, such as steel, titanium, aluminium or aluminium alloy, and alike. The material is to be chosen in function of e.g. the final use, the loads of the devices to be coupled, the forces to be resisted and many other circumstances of use. This is also applicable for the dimensions of the coupling means, e.g. larger dimensions may be chosen to couple devices which will generate larger forces.

According to a second aspect, a coupling system for coupling a load carrier and a load is provided. The coupling system comprises at least one coupling means according to the first aspect of the invention, being part of one of the load carrier and load, the other of the load carrier and load comprises a coupling element having an opening whose perimeter fits over the outer side of the stationary unit at the contact surface between the coupling part and the stationary unit, the openings perimeter fits over the coupling part in a first rotational position of the coupling shaft relative to the stationary unit, the coupling parts radial perimeter extends radially beyond the openings perimeter in a second rotational position of the coupling part relative to the stationary unit.

According to some embodiments, the opening perimeter and the outer side of the stationary unit at the contact surface between the coupling part and the stationary unit may be form-locking.

Preferably the outer side of the stationary unit at the contact surface between the coupling part and the stationary unit snuggly fits in the opening perimeter. Most preferably both the opening perimeter and the outer side of the stationary unit at the contact surface between the coupling part and the stationary unit are polygonal, such as rectangular or square.

According to some embodiments, the thrusting unit may be axially reciprocally displaced by the other of the load carrier and load comprising the coupling element.

The other of the load carrier and load comprising the coupling element may comprise a pushing means to push the thrusting unit away from the coupling element and/or a lifting means to lift the thrusting unit towards the coupling element.

According to some embodiments, the volume of the thrusting unit may be larger, wider, than the perimeter of the opening. As such the opening may not slide over the thrusting unit. By moving the opening along the axial direction, the coupling element may induce a reciprocation by pushing the thrusting unit in axial direction away from the stationary unit, due to the one of the load carrier and load comprising this coupling element to make a axial movement relative to the other of the load carrier and load.

According to some embodiments, the load carrier may be a vertically moveable vehicle, the coupling shaft being oriented substantially vertically.

According to some embodiments, the vertically moveable vehicle may be an aviation vehicle, such as an airship, e.g. as a balloon or a zeppelin, a helicopter, a drone or an airplane adapted to vertically take off.

According to some embodiments, the load carrier may be a military load carrier.

According to some embodiments, the load may be a battery or a military load such as ammunition.

According to some embodiments, the outer surface of the coupling shaft and/or the stationary unit may comprise a first part of an electrical coupling means, the coupling element comprises a second part of said electrically coupling means, adapted to electrical couple to said first part.

The coupling element comprises this second part of the electrically coupling means at the edge or rim of the opening in the coupling element.

Between the outer surface of the coupling shaft and the stationary unit more than one electrical coupling means may be provided. Each electrical coupling means may comprise two parts, one part being provided at the outer surface of the coupling shaft and/or the stationary unit, the second part being provided at the coupling element, such as at the edge or rim of the opening in the coupling element

These one or more electrical coupling means may be used to transfer, as the case may be, electrical power of electrical signals between the load and the load carrier.

According to some embodiments, the coupling system further may comprise an actuator for actuating a relative axial movement of the load and load carrier during carrying of the load.

The actuator may cause the load and the load carrier to move in axial direction one relative to the other, thereby causing the coupling means to make a further rotation. In case this rotation brings the coupling shaft again in a position identical to the first relative position, the load carrier and the load may decouple. As such, and in case the load carrier is an aviation vehicle, the load can be decoupled on purpose, hence dropped at a given moment in time during flight.

Such actuator may e.g. be an electric actuator or an electromagnetic actuator. Optionally, even alternatively, the actuator may widen the opening, such that the coupling means fits through the enlarged opening, causing the coupling to be broken.

According to a third aspect, the coupling mechanism according to the first aspect of the invention is used to couple load to a load carrying vehicle for civil or military purposes.

According to a fourth aspect, the coupling system according to the second aspect of the invention is used to couple load to a load carrying vehicle for civil or military purposes.

As an example, in civil or military use, the coupling mechanism or system may be used to pick up and put down batteries for drones. These batteries may either be transported new, freshly reloaded or batteries in used, partially or fully empty state between a changing station and a pickup station. In the latter station, other drones may pick up a loaded battery for its own use during operation.

According to some embodiments, the coupling mechanism according to the first aspect of the invention, or a coupling system according to the second aspect of the invention, is used for coupling batteries to drones.

Alternatively, these picked up batteries may be used by the drone as an additional battery during operation.

As an example, in civil or military use, the coupling mechanism or system may be used to pick up and put down payload of drones.

According to some embodiments, the coupling mechanism according to the first aspect of the invention, or a coupling system according to the second aspect of the invention, is used for coupling weapons, ammunition or military payload to a drone.

It is understood that in the context of this invention, when reference is made to ranges, these ranges are to be understood inclusive except explicitly indicated different. It is also understood that features of one aspect of the invention may be combined with one or more features of one or more other aspects of the invention.

### Brief Description of the Drawings

Figure 1 illustrates schematically an exploded view of a first embodiment of a coupling means according to the invention.
Figure 2 shows schematically a cross section of this coupling means of figure 1.
Figures 3a to 3d show schematically a radial cross sections of parts of the coupling means of figure 1.
Figures 4a and 4b show schematically a top view of a coupling means with its coupling part in two different rotational positions.
Figures 5a and 5b show schematically a top view of a coupling means with its coupling part in two different rotational positions combined with a coupling element of a load.
Figure 6a and 6b schematically show a cross section of two other coupling means according to the invention.
Figure 7 shows an exploded view of one of the coupling means of figure 6.
Figure 8 shows this exploded view and cross section in combination.
Figure 9 shows some details of elements of the coupling means of figure 6 to 8.
Figures 10a to 10h show schematically details of the coupling means of figures 6 to 9 in various steps of the coupling and decoupling.
Figures 11a to 11 hand 12a to 12h show schematically details of the coupling means of figures 6 to 9 in various steps of the coupling and decoupling with parts hidden.
Figure 13 shows schematically a drone coupling with a load comprising a coupling means according to figures 6 to 12.
Figures 14a to 14d show schematically a drone coupling with a load comprising a coupling means according to figure 13.

In the different figures, the same reference signs refer to the same or a similar object.

### Detailed Description of Embodiment(s)

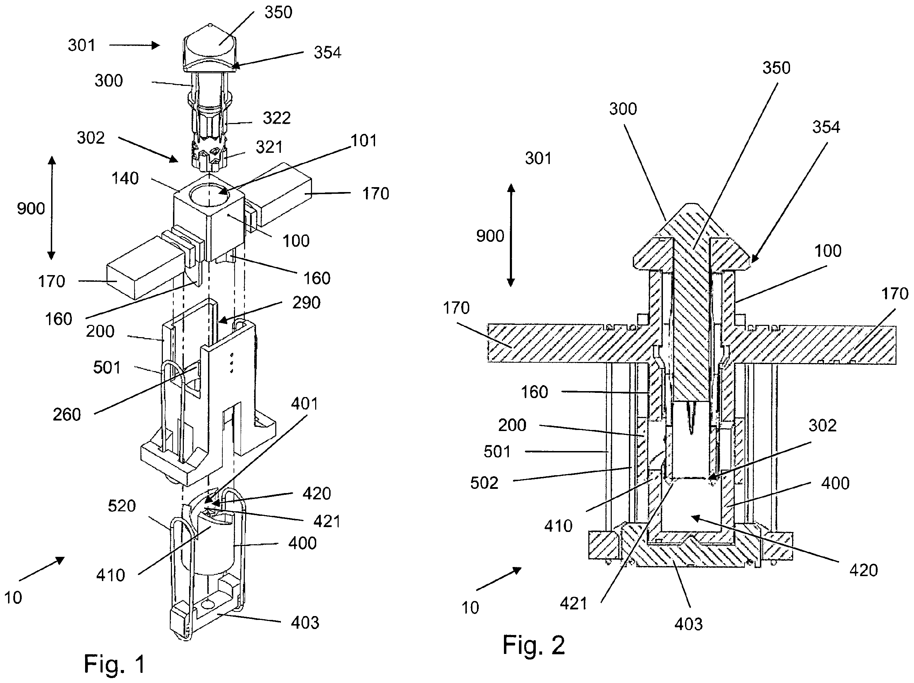

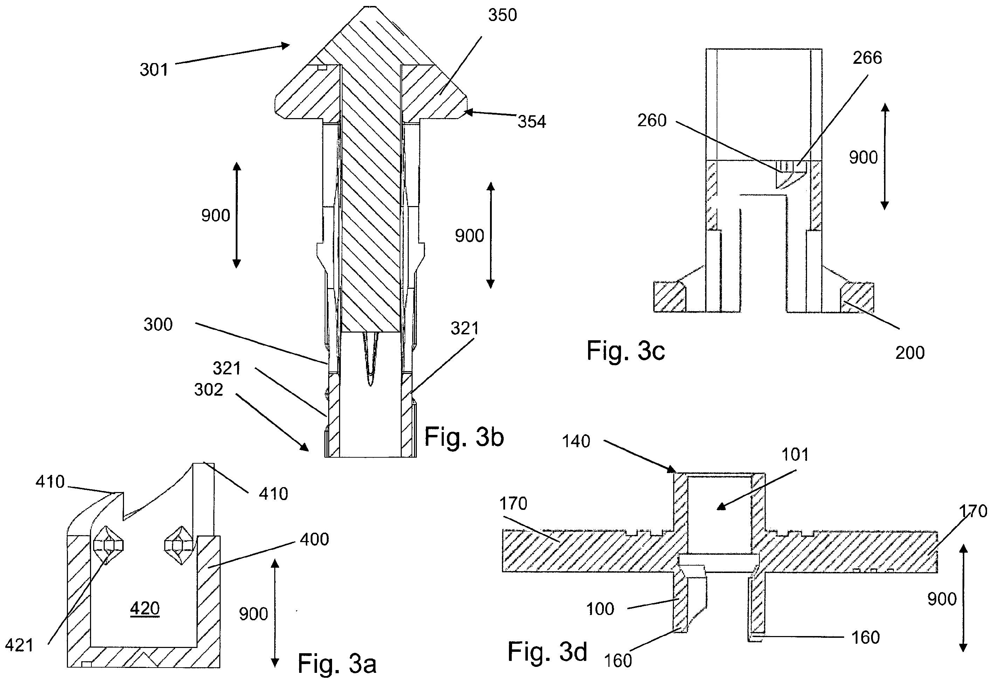

An exploded view of a first embodiment of a coupling means 10 according to the invention is shown in figure 1. Figure 2 shows a cross section of this coupling means 10, the thrusting unit 200 being in extended position. The thrusting unit being extended in this embodiment means the thrusting unit is lowered downwards. Figures 3a to 3d shows radial cross sections of parts of the coupling means 10. The same reference signs refer to the same features.

A stationary unit 100 is shown having a hollow passage 101. In this embodiment the hollow passage 101 is a cylindrical passage extending through the stationary unit 100 in axial direction 900. The stationary unit has at its lower side two stationary cams 160, at an angular distance of 180°. Two wings 170 serve to couple this stationary unit to a device which can be either a load to be coupled to a vehicle, or the vehicle which is to couple to a load. It is clear that other parts may be provided to the stationary unit to enable this coupling.

The outer surface of this stationary unit is the surface of a square cubic volume.

At the top surface 140 of the stationary unit, an opening is provided for this hollow passage, through which a coupling shaft 300 is axially rotatably mounted in the hollow passage of the stationary unit. The coupling shaft has at its first outer end 301 a coupling part 350. The radial perimeter 354 of the coupling part is adapted to avoid the first end to enter the hollow passage of the stationary unit. In this embodiment the radial perimeter 354 is substantially square. Although this coupling shaft 300 may be a one-piece unit, possibly the coupling shaft 300 has a cylindrical rod which is fixed to the coupling part. At the lower end 302 of the coupling shaft, ribs are provided as will be set out under. The second outer end 302 extends though the hollow passage of the stationary unit.

The coupling means 10 further comprises a thrusting unit 200, which thrusting unit is reciprocally axially slidably moveable in view of the stationary unit and is restrained against rotation relative to the stationary unit. The thrusting unit has a substantially cuboid inner void, actually a hollow passage. Two sides of the cuboid void, are provided with slits 290 to avoid hinderance of the thrusting movements in axial direction of the thrusting unit over the outer surface of the stationary unit, by the presence of the wings 170. The outer surface of the stationary unit and the shape of the inner void of the thrusting unit are form-locking. Therefore, the thrusting unit cannot rotate relative to the stationary using, while it can slide in axial direction over the stationary unit. Between the stationary unit and the thrusting unit, a first spring, here an elastic band, is provided. This first spring, in fact two first springs, one at two opposite sides of the cuboid volume of the thrusting unit, are adapted to cause a relative movement between the thrusting unit and the stationary unit, in this case a movement from the thrusting unit towards the stationary unit. The first springs are mount between the feet of the wings and an extension at the lower side of the thrusting unit.

At the lower side of the thrusting unit, a cam unit 400 is provided. This cam unit 400 comprises a tubular cam body 402 which is axially slidably moveable in view of the thrusting unit 200, i.e. within the inner void of the thrusting unit , and which is rotatable in view of the thrusting unit 200 and hence the stationary unit 100. Tubular cam body 402 has a void inner space 401 which is adapted to receive the second outer end 302 of the coupling shaft 300.

The cam unit 400, at the rim of the tubular cam body 402 comprises four cam surfaces 410 oriented towards the stationary cams 160. The apexes of the four cam surfaces are at an angular distance of 90°. Two mutually opposite cam surfaces have an apex which is at a closer position in axial direction to the stationary cams, as compared to the apexes of the two other cam surfaces. A second spring 502, again a pair of springs, are adapted to cause a relative movement between the cylindrical cam unit and the stationary unit. For this a beam 403 is provided at the lower side of the cam unit 400, each of the two springs being in connation with one outer end of this beam, and coupled to the one of the feet of the two wings of the stationary unit.

The stationary cam, the thrusting unit and the cam unit are adapted to sequentially unidirectionally rotate the cam unit relative to the stationary cam on successive reciprocations of the thrusting unit over the stationary unit. For this, in this embodiment, the thrusting unit comprises two fingers 260. This is best visible in figure 3c.

The thrusting unit is reciprocally axially slidably moveable between a retracted position and an extended position. The thrusting unit moving to its retracted position means that the thrusting unit moves axially in the direction of the stationary cams. The thrusting unit moving to its extended position means that the thrusting unit moves axially in the direction of the cam unit. In this embodiment, when the thrusting unit is in retracted position, the stationary cams 160 are pressed in contact with two opposite cam surfaces 410 of the cam unit 400. The two fingers are positioned such that they contact the cam surfaces 410 along the sloped part of the cam surfaces, preferably adjacent the apex of the cam surfaces. The two fingers press the two opposite cam surfaces 410 away from the stationary cams when the thrusting unit is brought to the extended position. In this embodiment, the stationary cams 160 and the cam surfaces 410 have a surface being parallel to the axial direction, along a part of the cams, which stay in contact with each other during the axial movement of the thrusting unit. During this movement of the thrusting unit from retracted to extended position, the first and second springs are force loaded seen their extension. The cam unit stays in rotational position unchanged as long as the apexes of the cam surfaces 410 and the stationary unit cams 160 are in contact with the surface being parallel to the axial direction, of the other of the surfaces 410 and the stationary unit cams 160. The moment the cam surfaces of the cams of the cam unit and the stationary cams loose contact, the second springs pull the cam unit towards the stationary unit. This pull cause the rotation of the cam unit in a direction towards the surface being parallel to the axial direction. The rotation ends when the fingers are at the root of the cam surfaces 410. The thrusting unit may further extend to its extended position.

Hence the stationary cams 160 are adapted to block the cam unit when the thrusting unit is in rest or retracted position and the thrusting unit may cause a rotation of the cam unit due to the displacement from its rest or retracted position to the extended position. The cam unit will no further rotate.

When the thrusting unit now is brought back to its retracted position, the cam surfaces of the cams of the cam unit and the stationary cams will contact each other again at a certain axial displacement of the thrusting unit. Dependent on the position where the fingers touch the cam surfaces 410, once the fingers are no longer in contact with the cam surfaces, the cam unit may rotate further to a position where the two surfaces being parallel to the axial direction are again in full contact.

As the second end of the coupling shaft is received in the void inner space of the cam unit, it is possible to enable the coupling shaft to perform the complete or a part of the rotation of the cam unit as well. The cam unit and coupling shaft are adapted to permit relative axial movement of the cam unit and coupling shaft when the second outer end of the coupling shaft is received in the void inner space 401. As an example, the inner surface 420 of the cam unit and the outer surface of the coupling shaft may form an axial cam system. The outer surface of the coupling shaft comprises recessions 321 (this is best visible in figure 3b), the inner surface 420 of the void inner space of the cam unit comprises protrusions 421 (this is best visible in figure 3a). As such the recesses may form a path or labyrinth for the protrusions which these protrusions are to follow during rotation of the cam unit. This may cause a relative rotation of the coupling shaft in view of the cam unit during the rotation of the cam unit itself. The recesses may prevent protrusions from rotating along with the cam unit, thereby causing the coupling shaft no to rotate along with the cam unit. As such, during two thrusting movements (from retracted to extended back to retracted position of the thrusting unit), this axial cam system may force the coupling shaft to rotate (thus relatively stand still in view of the cam unit) during one of the movements, while forcing it to stand still (thus relatively move in view of the cam unit) during the other of the two movements. Other ribs 322 on the coupling shaft and/or obstructions in the thrusting unit may assist this partial co-rotation. As an example, protrusion 266 on the fingers 260 co-act with these ribs 322 and as such may keep the coupling shaft fixed in certain phases of the thrusting hence rotation of the cam unit and coupling shaft. The effect may be that, and in this embodiment, the coupling shaft performs only half of the rotation of the cam unit. This means that while the cam unit rotates 90°, the coupling shaft will only rotate 45°.

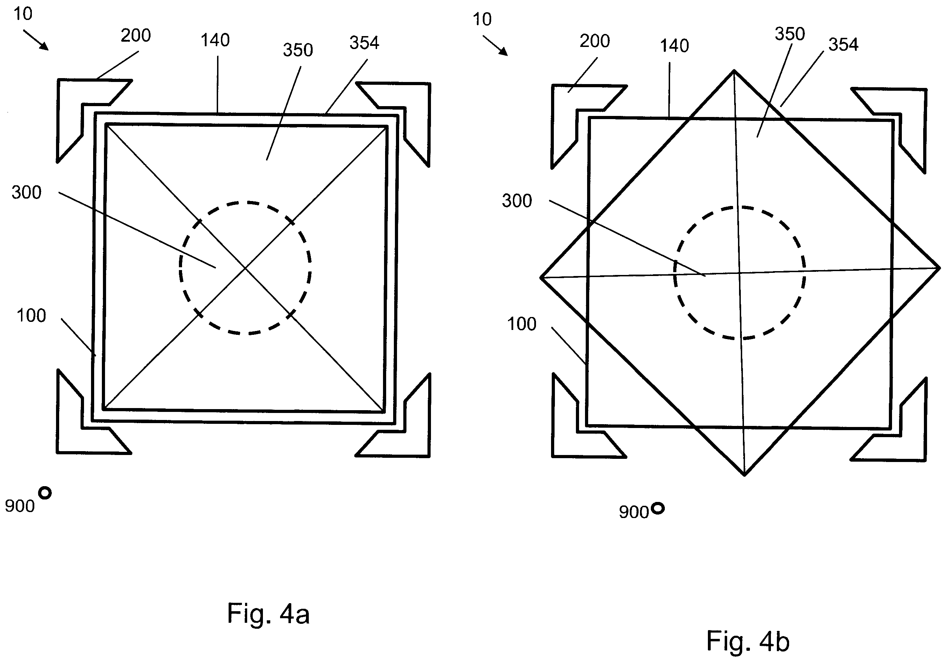

Turning to figures 4a and 4b, this effect is schematically shown. Before one pair of thrusting movements of the thrusting unit, as shown in figure 4a, the thrusting unit being in retracted position, the coupling part 350, having a radial perimeter 354 being substantially square, is aligned with the top surface 140 of the stationary unit 100. After one pair of thrusting movements of the thrusting unit, as shown in figure 4b, the radial perimeter 354 of the coupling part 350 is unaligned with the top surface 140 of the stationary unit 100. It is 45° rotated. It is to be noted that the cam unit (not visible in these figures 2), have rotated 90°. If the coupling shaft would have co-rotated with the cam unit during the complete rotation, the radial perimeter 354 of the coupling part 350 would have been completely aligned again with the top surface 140 of the stationary unit 100.

When the next pair of thrusting movements are made, the coupling part will again be rotated 45°, bringing the radial perimeter 354 of the coupling part 350 completely aligned again with the top surface 140 of the stationary unit 100.

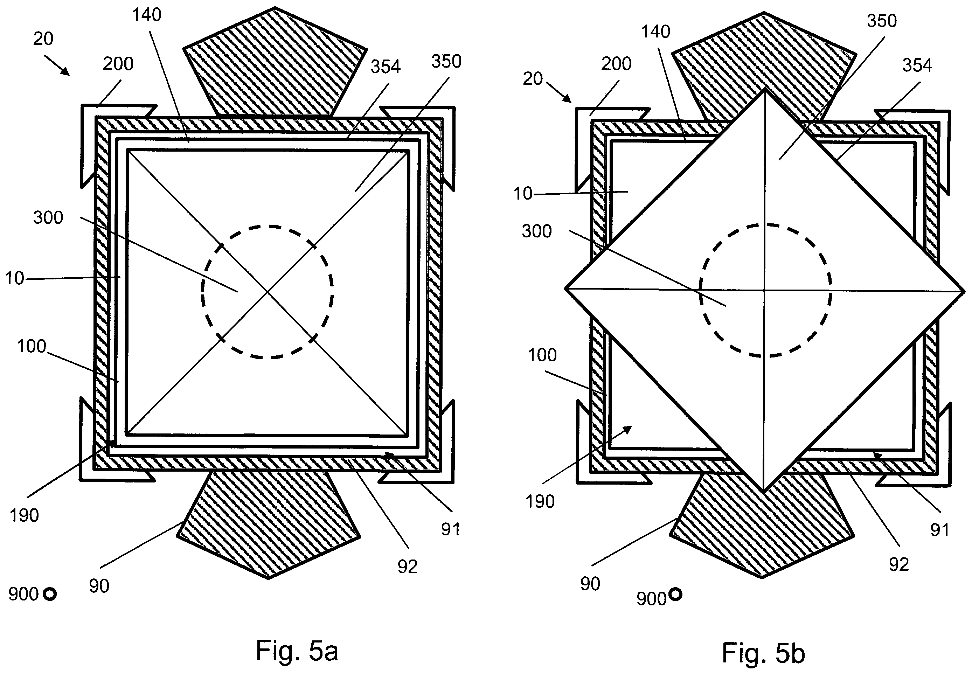

The use of this coupling means 10 is shown in figure 5a and 5b. For sake of explanation, it is assumed that the coupling means 10 is part of a load to be lifted by a vehicle with a coupling element represented in figures 5a and 5b by reference 90. As will be clear to the skilled person, the opposite situation where the coupling means 10 is part of a vehicle 99, which vehicle is to pick up a load is similar.

In figure 5a, the vehicle 99 comprises a coupling element 90 having an opening 91 which opening has a square perimeter 92 fitting over top surface 140 of the stationary unit 100. The vehicles coupling element 90 is brought over the top surface 140 of the stationary unit 100 and the coupling part 350, and pushes down the thrusting unit 200 as is shown in figure 5a. The thrusting unit is now brought from its retracted to its extended position, which causes the coupling shaft and the coupling part to rotate 45° (figure 5b). When the vehicle is trying to remove the coupling element 90 back from the top surface 140 of the stationary unit 100 and the coupling part 350, the thrusting unit is brought back in retraced position. As no further rotation of the coupling shaft occurs, the perimeter 92 of the opening 91 intersects with the perimeter of the coupling part 350. The vehicle further moving the coupling element 90 in the same direction, hence flies upwards, will drag along thus lift the load to which the coupling means is attached.

During a next movement of the thrusting unit, when the coupling element 90 pushes down the thrusting unit 200 and back, the coupling part will again rotate and the coupling element 90 may slide from the coupling means. When this occurs when the load is first brought to ground level, the load will be placed on the target ground. When such second thrusting cycle occurs during flight, the load to which the coupling means is attached, will drop under gravity.

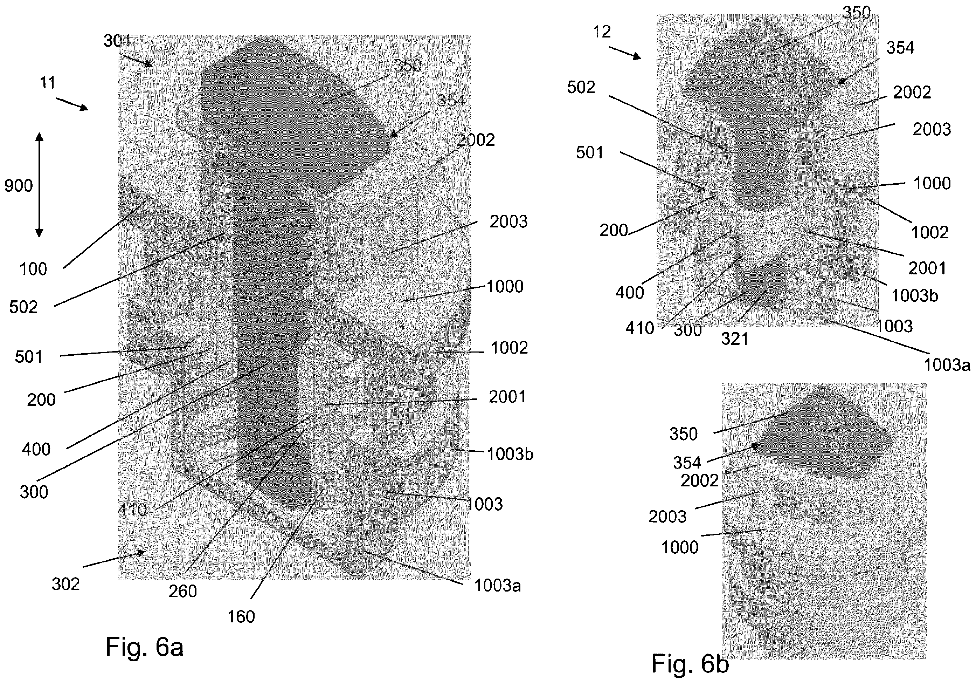

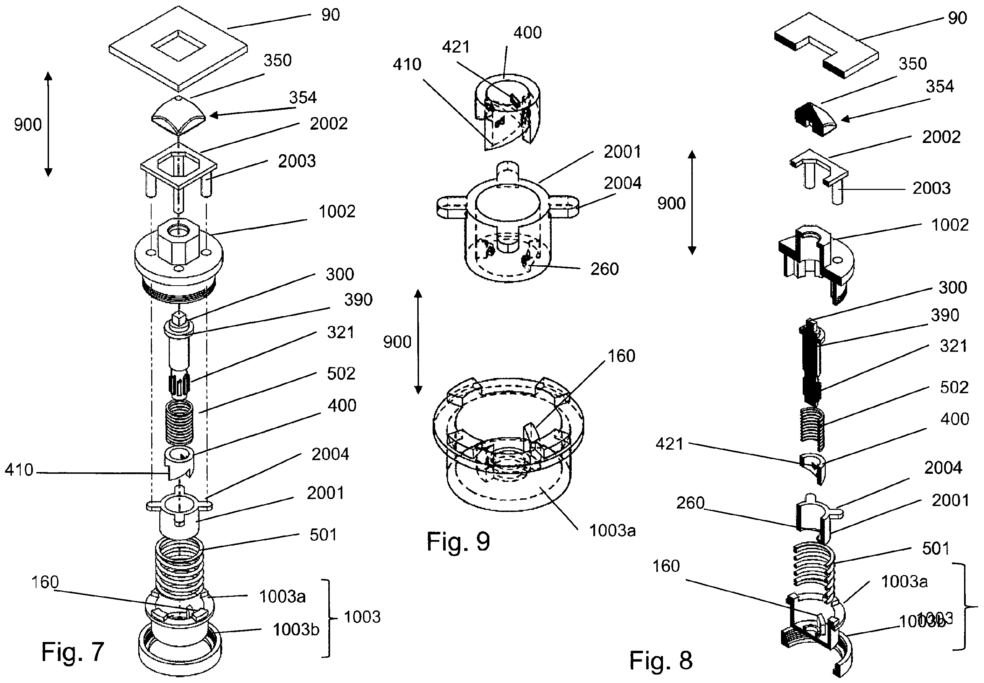

Figure 6a schematically shows a cross section of another embodiment of a coupling means 11 according to the invention. Figure 7 shows an exploded view of this coupling means 11, while figure 8 shows this exploded view and cross section in combination. Figure 9 shows some details of elements of the coupling means 11.

The same reference refer to similar components and features. The stationary unit 100 comprise a housing 1000 having an inner void space 1001, and comprises two housing parts, an upper part 1002 and a lower part 1003 being detachably connected to each other by means of screw thread. The lower part 1003 may even comprise two parts 1003a and 1003b, the part 1003b being a ring used to screw the cup-shaped part 1003a to the upper part 1002.

The thrusting unit 200 comprises a first component 2001 located in the inner void space of the stationary units housing 1000. The second component 2002 is located at the outer side of the stationary units housing 1000. The first component of the thrusting unit is moved by the second component by means of a third component extending though the housing of the stationary unit, in this embodiment being composed four bars 2003 coupled to the second component 2002 and extending though the housing 1000 of the stationary unit. The first component 2001 has a tubular shape, to which four flanges 2004, one flange for each bar are provided.

The housing houses the first and second spring 501 and 502, in this embodiment being coiled springs, the cam unit 400 and the first part 2002 of the thrusting unit.

The stationary cam 160 is provided at the bottom part of the housing 1000. The first component 2001 of the thrusting unit has a finger 260. The coupling shaft 300 is provided with a coupling part 350 at its first end. The second end of the coupling shaft extends through the housing, through a hollow passaging inside the housing 1000, through the thrusting unit and through the cam unit. At the second end of the coupling shaft, where the coupling shaft passes through the cam unit, an axial cam system is provided. The coupling shaft has a rod 390 which is detachably coupled to the coupling part 350.

This coupling means 11 works in a similar way as the coupling means 10. The thrusting unit being in its retracted position, i.e. with the spring 501 most compressed, prevents the cam unit 400 to rotate due to blockage by the stationary cams 160. When the thrusting unit is extended by the force of the first spring 501, the cam surfaces 410 are brought in contact with the finger 260. The moment the cam surfaces 410 lose contact with the stationary cams 160, the second spring, which was compressed in the starting position of the thrusting unit, releases energy causing the cam surfaces to slide over the stationary cams and over the fingers up to a moment that vertical parts of the cam surfaces contact vertical parts of the surface of the fingers . Hence the cam unit makes a rotation and comes to a standstill, with the apex of the fingers located at the root of the cam surfaces. When the thrusting unit, having been brought in its extended position, returns to the retracted position, due to a force applied to the second part 2002, which cause the bars 2003 to push the flanges and hence the first part 2001 downwards, the cam surfaces 410 may further rotate until the stationary cams 160 block the rotation of the cam unit again. The cam unit has made a rotation of a given angle. Due to the axial cam between the coupling shafts surface and the inner side of the cam unit, the coupling part may have only performed part of the rotation of the cam unit.

The result is identical as shown an described for figures 5a and 5b.

In the context of these embodiments, all parts have been made in polymer material using 3D printing techniques. It is however clear that the parts may be made in any other suitable material. Also the dimensions of the parts may be adapted according to the loads and the needs of the use.

Turning to figure 6b, this coupling means 12 is substantially identical to coupling mean s 11 of figure 6a. The difference between coupling means 11 and 12 is that in coupling means 12, the coupling part is not square but rectangular, and the axial cam system between the lower end of the coupling shaft and the inner surface of the cam unit is so designed that the coupling shaft follows the rotation of the cam unit completely. This means that in the first pair of trusting movements of the thrusting unit, the coupling shaft rotates 90°, and in the consecutive pair of thrusting movements of the trusting unit, the coupling shaft rotates again 90°, in sum thus 180° upon two pairs of thrusting movements of the thrusting unit. When a coupling element with a corresponding rectangular opening is aligned and moved over the rectangularly designed coupling part, the thrusting unit making one pair of thrusting movements, the coupling part will be rotated 90°. As such the perimeter of the coupling part and the edge of the opening in the coupling element will intersect, hence the coupling being realised. Once the thrusting unit has made a further pair of thrusting movements, the perimeter of the coupling part and the edge of the opening in the coupling element will be again aligned and decoupling may take place.

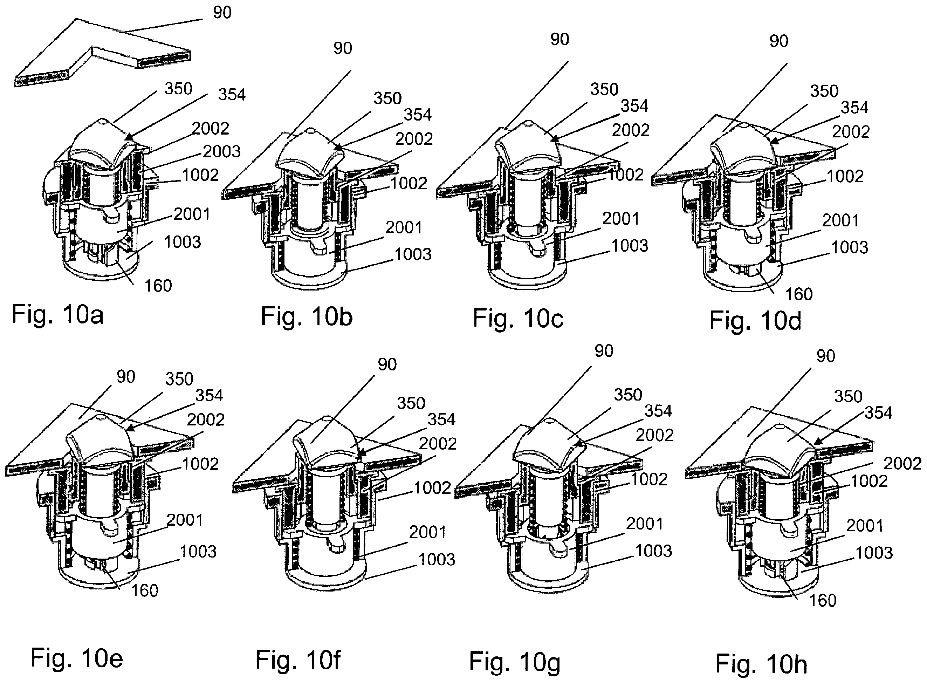

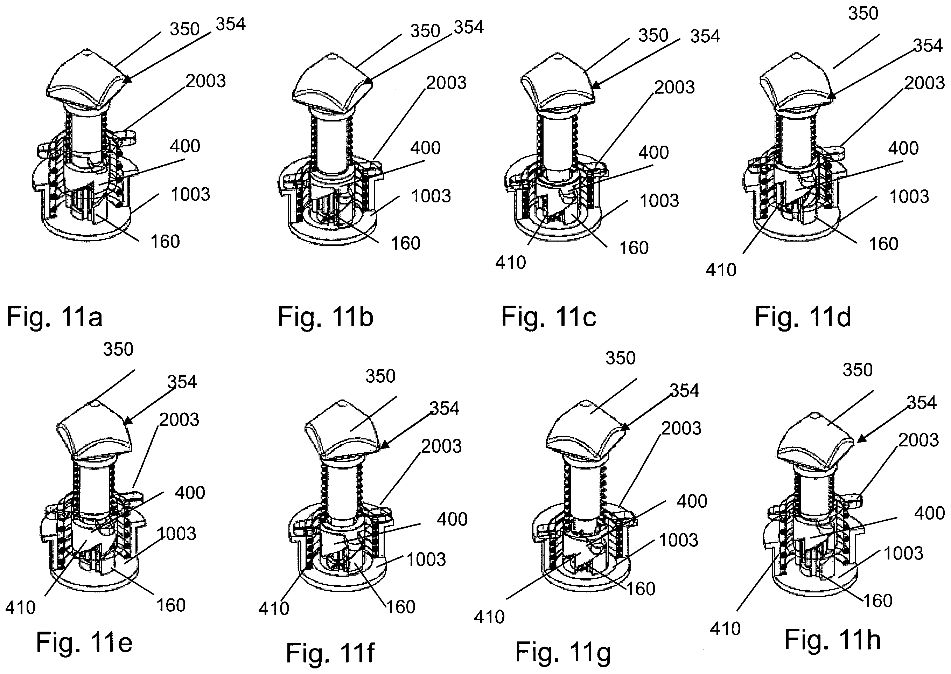

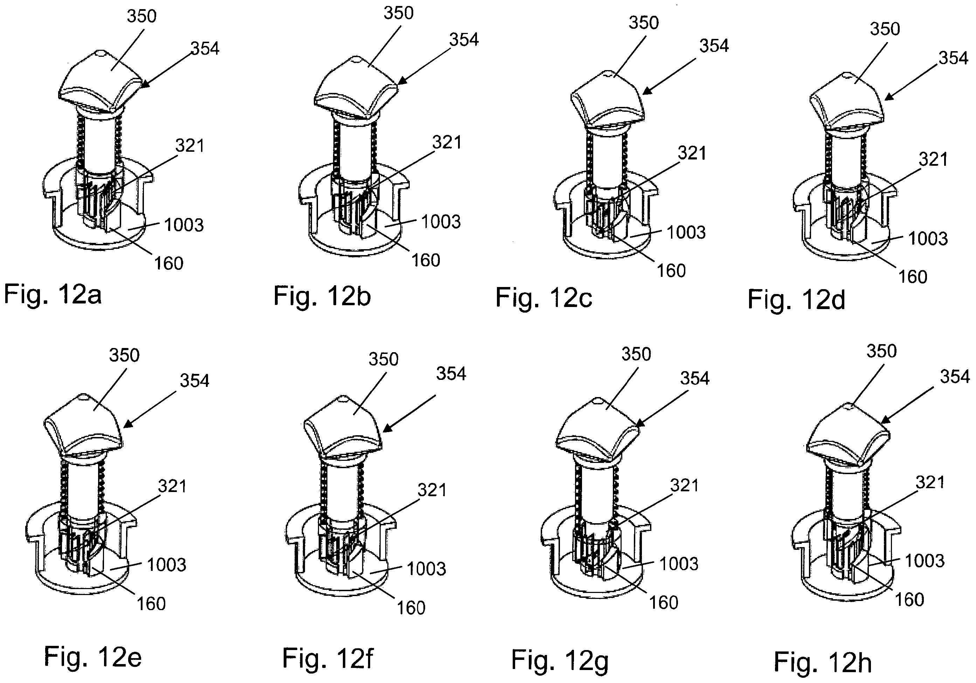

In figures 10a to 10h, a sequence of snapshots of the movement of a coupling means 11 is shown where parts of the coupling means are hidden to provide in inside view of the components and units of the coupling means. Figures 11a to 11h, and figures 12a to 12h show the same series of snapshots with even more units and elements hidden.

In figures 10a, 11a and 12a, a coupling element 90 is to bring its opening 91 over the coupling means11. The opening fits over the coupling part 350. In figures 10b, 11b and 12b, the coupling element 90 pushes the thrusting unit 200 downwards, the cam unit 400 is also brought downwards, but the rotative position of the cam unit and the stationary cam do not alter until the two cam surfaces are in contact with each other. At that moment, the cam unit will make a relative rotation to the stationary unit guided by the cam surfaces. The cams of the axial cam between the coupling shaft and the cam unit cause the coupling shaft to corotate over a given angle, here 45°, so the position shown in figures 10c, 11c and 12c is reached. The composition of the thrusting unit 200 by the coupling element 90 is removed, causing the thrusting unit to return to its starting position (figure 10d, 11d, 12d) and the cam unit further rotates, while the axial cam is constructed so the cam shaft does not corotate. The position in figure 10e, 11e, 12e is reached. As the coupling part has rotated 45° and the opening and the perimeter of the coupling part are no longer aligned, the coupling element is coupled to the coupling means. When a vehicle is connected to either one of the coupling element and the coupling means, and a load is connected to the other of the coupling element and the coupling means, the vehicle and the load are connected.

To decouple, the same steps happen when the thrusting unit makes the next thrusting movements as consecutively shown in figure 10f, g and h, 11f, g and h and 12 f, g and h. Again, by this thrusting movements, the coupling part rotates 45°, now bringing the perimeter of the coupling part and ethe opening in the coupling element back aligned. The coupling element may be moved over the coupling part and a such the vehicle and the loas are decoupled.

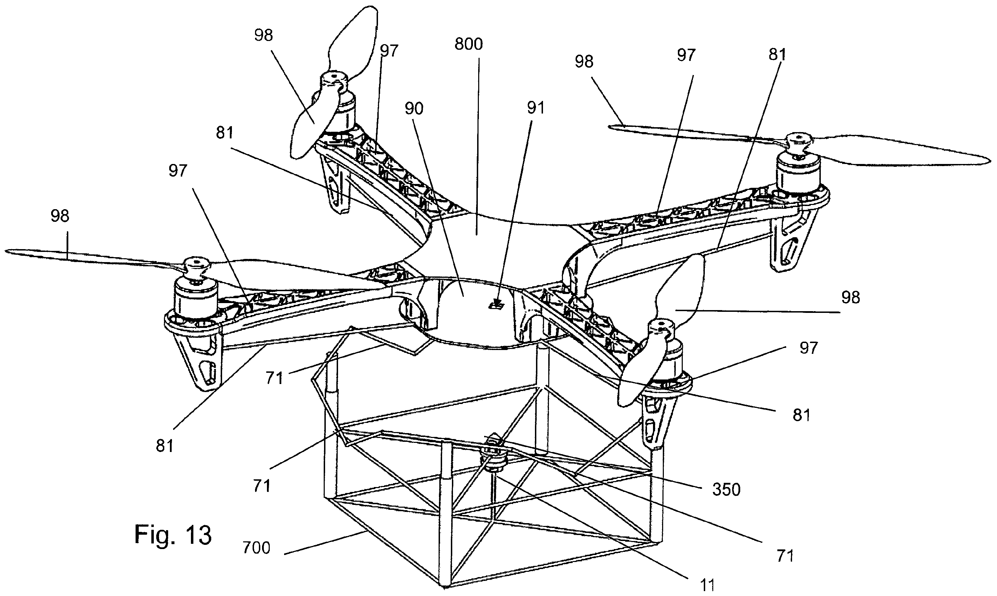

As shown in figure 13, the vehicle 99 may be a drone 800. The drone 800, being a dedicated transport drone, can pick up and transport any load 700 provided with a coupling means according to the invention, like coupling means 10, to another position, while no human intervention is needed to couple or decouple the load to the drone. As a mere example, the load may be spare batteries of drones, being brought from a safe spot to the battle field by these transport drone. Drones used on the battlefield, may pick up these spare drones put on the battle field, while leaving their empty batteries behind. These empty batteries may be picked up again by dedicated transport drones. Alternatively, in the same way, drones may pick up ammunition or bombs or rockets from a safe spot using this coupling system, and may drop the military load above the battlefield upon an easy activation of the coupling means. The provision of electrical connections between the load and the vehicle through this coupling means, may facilitate exchange of power and/or information between the coupled devices.

To facilitate the positioning of the coupling part 350 in view of the opening 91 on the coupling element 90 of the vehicle 99. In this embodiment, the drone 800, having four lifting screws 98, each positioned at the outer end of an arm 97, which arms make a rectangular cross, may be provided with a bar system 80, comprising four bars 81 coupled to a central point under the drone. The load 700 may be provided at four crosswise spread positions on the top surface of the load, with four V-shaped guiding means 71. When the drone 800 descends on the load, each V-shaped guiding means will contact one of the bars 81. The bars will guide the root of the V shape such that the drone 800 gets centralised above the load 700, which will cause the coupling part 350 and the opening 91 on the coupling element 90to become aligned.

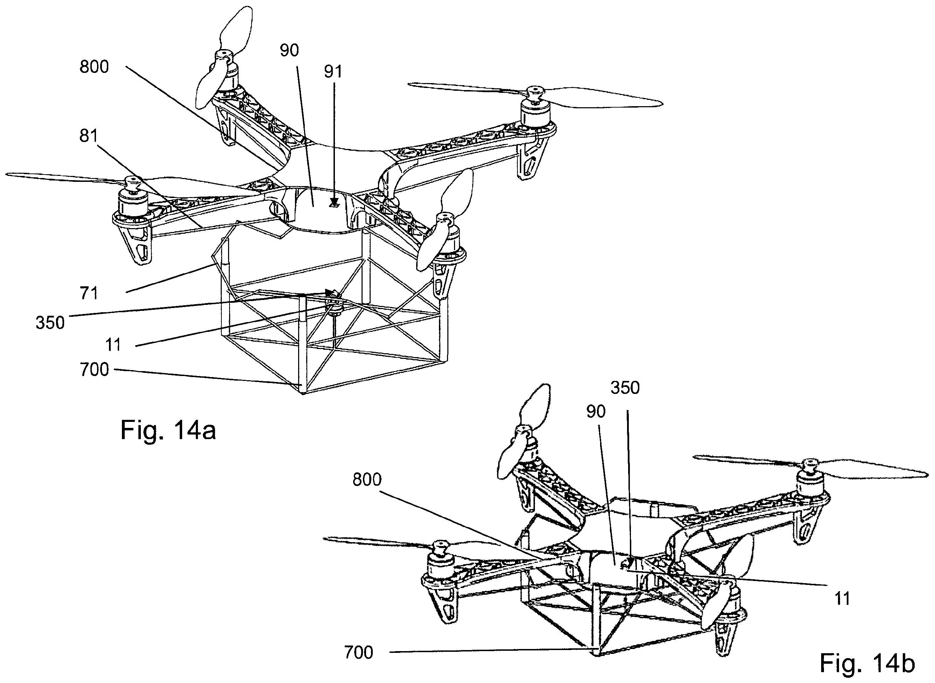

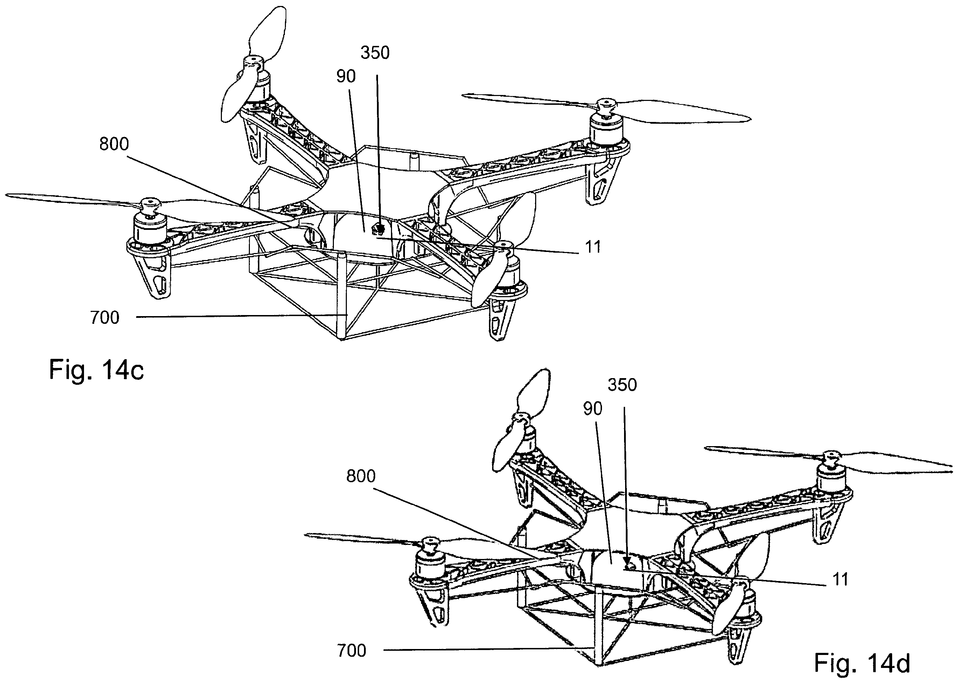

Figures 14a to 14d show a sequence of motions of a drone, wherein the load 700 is coupled to the drone 800. As visible in figure 14a, the drone approaches the load 700 which may be resting on a support. When the drone approaches and lowers its height, the bars 81 of the bar system will contact the V shaped guiding means, and the bars will be guided to the roots of the V-shapes. In this way the opening 91 will become vertically aligned with the coupling part 350 of the coupling means 11 being connected to the load 700. Once the opening of the coupling element 90 on the drone 800 has passed the coupling part 350 (figure 14b), it will push the thrusting unit of the coupling means 11 down as is explained by means of the figures 10, 11 and 12. The coupling part will make a rotation of 45°, as is shown in figure 14c. when the drone 800 now moves vertically upwards, the coupling elements opening 9 will hook under the coupling part and the load 70 will be taken in the vertical movement of the drone. As such the drone can take the load along in its flight.

Making the same movements again, while putting the load back on a support, the coupling part may make a further 45° rotation, which decouples the load from the drone. This may also be obtained in flight, when an actuator brings the load closer to the drone, causing the thrusting unit to make its next thrusting movements and drive the coupling part to rotate 45°.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

**1.** A coupling means (10) comprising:
- a stationary unit (100, 100a, 100b) having hollow passage (101) comprising at least one stationary cam (160);
- a thrusting unit (200, 200a, 200b), said thrusting unit is reciprocally axially slidably moveable in view of the stationary unit and is restrained against rotation relative to the stationary unit;
- a coupling shaft (300) axially rotatably mounted in the hollow passage of the stationary unit, the coupling shaft having at its first outer end (301) a coupling part (350), adapted to avoid the first end to enter the hollow passage of the stationary unit, the second outer end (302) extending though the hollow passage of the stationary unit;
- a cam unit (400) which is axially slidably moveable in view of the thrusting unit and rotatable in view of the thrusting unit, and having void inner space (401) for receiving the second outer end of the coupling shaft, said cam unit comprising a plurality of spaced cam surfaces (410) at its end oriented towards the stationary cam,
- a first spring (501) adapted to cause a relative movement between the thrusting unit and the stationary unit;
- a second spring (502) adapted to cause a relative movement between the cylindrical cam unit and the stationary unit;
wherein said stationary cam, thrusting unit and cam unit are adapted to sequentially unidirectionally rotate the cam unit relative to stationary cam on successive reciprocations of the thrusting unit over the stationary unit, the cam unit and coupling shaft are adapted to permit relative axial movement of the cam unit and coupling shaft when the second outer end of the coupling shaft is received in the void inner space (401).

**2.** A coupling means according to claim 1, wherein the cam unit and coupling shaft are adapted to permit restrained relative rotational movement of the cam unit and coupling shaft.

**3.** A coupling means according to any one of the preceding claims, wherein the thrusting unit (200) has a hollow passage (201) in which the stationary unit is at least partially sunk.

**4.** A coupling means according to claim 3, wherein the thrusting unit is reciprocally axially slidably mounted on the outer surface (102) of the stationary unit.

**5.** A coupling means according to claim 3, wherein the stationary unit comprises a housing having an inner void space, the thrusting unit comprises a first component located in said inner void space of said stationary unit, and a second component located at the outer side of said stationary unit, the first component of the thrusting unit being moved by the second component by means of at least a third component extending though the housing of the stationary unit.

**6.** A coupling means according to claim 5, wherein the housing is adapted to encompass the first and second spring, the cam unit and at least part of the thrusting unit.

**7.** A coupling means according to any one of the preceding claims, wherein the angular displacement of the coupling shaft is less than the angular displacement of the cam unit during each reciprocation of the thrusting unit over the stationary unit.

**8.** A coupling means according to any one of the preceding claims, wherein the inner surface (420) of the void inner space of the cam unit and the outer surface (320) of the coupling shaft form an axial cam system.

**9.** A coupling means according to any one of the preceding claims, wherein the thrusting unit is reciprocally axially slidably moveable between a retracted position and an extended position, said stationary cam is adapted to block the cam unit when the thrusting unit is in rest position, the thrusting unit has at least one finger (260) to move the cam unit from a rest position wherein the cam unit is closest to the stationary cam, to a projected position wherein the cam unit is most extended from the stationary cam, said stationary cam and said at least one finger coacting with said cam unit upon axial movement of the thrusting unit to sequentially traverse said stationary cam and thereby unidirectionally rotate the cam unit to successively different rotative positions relative to stationary unit during reciprocations of the thrusting unit.

**10.** A coupling means according to any one of the preceding claims, wherein during one reciprocation, said cam unit unidirectionally rotate in two steps to two successively different rotative positions relative to stationary unit, said stationary unit, thrusting unit, coupling shaft and cam unit are adapted to sequentially unidirectionally rotate the cam unit and the coupling shaft relative to the stationary unit during the first of the two steps, and are adapted to sequentially unidirectionally rotate only the cam unit relative to the stationary unit during the second of the two steps.

**11.** A coupling system (20) for coupling a load carrier and a load, said coupling system comprises at least one coupling means (10) according to any one of the preceding claims being part of one of the load carrier and load, the other (90) of the load carrier and load comprises a coupling element having an opening (91) whose perimeter (92) fits over the outer side of the stationary unit at the contact surface (190) between the coupling part and the stationary unit, the openings perimeter fits over the coupling part in a first rotational position of the coupling shaft relative to the stationary unit, the coupling parts radial perimeter extends radially beyond the openings perimeter in a second rotational position of the coupling part relative to the stationary unit.

**12.** A coupling system according to claim 11, wherein the thrusting unit is axially reciprocally displaced by the other of the load carrier and load comprising the coupling element.

**13.** A coupling system according to any one of the claims 11 to 12, wherein the coupling system further comprises an actuator for actuating a relative axial movement of the load and load carrier during carrying of the load.

**13.** The use of a coupling mechanism according to any one of the claims 1 to 10, or a coupling system according to any one of the claims 11 to 13, for coupling batteries to drones.

**15.** The use of a coupling mechanism according to any one of the claims 1 to 10, or a coupling system according to any one of the claims 11 to 13, for coupling weapons, ammunition or military payload to a drone.
